# EUROPEAN PATENT SPECIFICATION

(11) **EP 4 439 964 B1**
(45) Date of publication and mention of the grant of the patent: **18.11.2026**
(21) Application number: 23165757.8
(22) Date of filing: 31.03.2023
(51) Int. Cl.: H02M 7/5387, H02M 7/757, H02M 1/00, H02J 3/36

(54) **A CONVERTER STATION AND A METHOD FOR CONTROLLING A CONVERTER STATION**
STROMRICHTERSTATION UND VERFAHREN ZUR STEUERUNG EINER STROMRICHTERSTATION
STATION DE CONVERSION ET PROCÉDÉ DE COMMANDE D'UNE STATION DE CONVERSION

(43) Date of publication of application: 02.10.2024
(73) Proprietor: Hitachi Energy Ltd, 8050 Zürich (CH)
(72) Inventor: Hafner, Ying-Jiang, 771 42 Ludvika (SE); Kumar-Nayak, Khirod, 56066 Bengaluru (IN); Sahu, Malaya Kumar, 771 32 Ludvika (SE); Abdalrahman, Adil, 702 18 Örebro (SE); Nami, Ashkan, 722 18 Västerås (SE)
(74) Representative: AWA Sweden AB

(56) References cited:
- EP-A1- 3 172 825
- WO-A1-2014/121438
- JP-A- 2000 350 461

## Description

### Technical field

The present disclosure generally relates to the field of converters in electric power systems. In particular, it relates to a converter station comprising at least two voltage source converters, as well as a method and a computer program product for controlling the converter station.

### Background

The converter station or HVDC converter station is a type of substation that forms a terminal equipment for a high-voltage direct current (HVDC) transmission line. Converter stations are often used for converting alternating current (AC) to direct current (DC) or vice versa, for example, for converting between three-phase AC and DC.

The converter station comprises at least two converters. The converter station is configured to be connected to a DC system and to an AC system. The DC system may be a bipolar DC system, i.e. a system comprising two DC poles. The first voltage source converter and the second voltage source converter of the at least two converters are connected to the respective one of the two poles and to each other. The two converters are connected to the same AC system, the two poles share the active power via a power frequency droop. They also share the AC voltage control via a voltage-reactive power droop.

The main advantage of operating both converters in this arrangement is that the two poles can automatically share the active power imbalance during grid restoration, or active power generated by wind farms, because of the power frequency droop functionality.

However, when both the converters are interconnected on the AC side, there is a risk of oscillations between the two poles.

For example, if the converter station is a black starting station in which both converters are connected to a further supporting station via the DC system it is possible that the two converters start to oscillate against each other.

Typically, the oscillation is caused by lack of coordination between the two converters. Both the converters act as a voltage source trying to maintain the voltage of the same node. JP 2000 350461 and EP 3 172 825 show examples of prior art converter devices.

### Summary

The invention is set out in the appended set of claims. Thus, it would be advantageous to achieve a method and a device to overcome, or at least alleviate, the above-mentioned drawbacks. In particular, it would be desirable to enable efficient damping of oscillations generated between the converters of the two poles. To better address one or more of these concerns, a method, a converter station, and a computer program product having the features defined in the independent claims are provided. Preferable embodiments are defined in the dependent claims.

Hence, according to a first aspect, a converter station is provided comprising at least two converters, including a first voltage source converter and a second voltage source converter. The converter station is configured to be connected to a direct current (DC) system and to an alternating current (AC) system. The DC system has two poles and the AC system has multiple phases. The first voltage source converter and the second voltage source converter are connectable to a respective one of the two poles and are also connected to each other. The converter station further comprises a first converter control unit and a second converter control unit connected to the first voltage source converter and to the second voltage source converter, respectively. The first converter control unit and the second converter control unit are configured to obtain phase currents of the first voltage source converter and phase currents of the second voltage source converter. The first converter control unit and the second converter control unit further comprise a first damping controller and a second damping controller, respectively. Each one of the first damping controller and the second damping controller comprises a regulator. The first damping controller is configured to determine first current differences by subtracting the phase currents of the second voltage source converter from the phase currents of the first voltage source converter, and the second damping controller is configured to determine second current differences by subtracting the phase currents of the first voltage source converter from the phase currents of the second voltage source converter. The first and second damping controllers are configured to multiply the first current differences and the second current differences, respectively, with a respective gain for generating first damping control signals and second damping control signals, respectively. The gain is introduced by means of the regulator. The first converter control unit is further configured to combine the first damping control signals with a converter reference voltage of the first voltage source converter, in order to provide modified converter reference voltages for the first voltage source converter. The second converter control unit is further configured to combine the second damping control signals with a converter reference voltage of the second voltage source converter, in order to provide modified converter reference voltages for the second voltage source converter, for damping of oscillations generated between the converters of the two poles in the converter station.

An advantage associated with the present disclosure is that the first converter control unit and the second converter control unit enable efficient damping of oscillations generated between the converters of the two poles in the converter station by modifying the converter reference voltages as defined.

The term converter station, or HVDC converter station, is a type of substation which forms the terminal equipment for a high-voltage direct current transmission line. The converter station comprises converters. In addition, the converter station may further comprise, for example, AC switch gear, DC switch gear, transformer, capacitors, filters.

The terms first damping controller and the second damping controller are used for controllers, like, P, PI, or PID controller. The first damping controller and the second damping controller are configured to determine the deviation in the converter station and generate the first damping control signals and the second damping control signals to eliminate or reduce the deviation in the converter station. Thereby, they reduce or eliminate the oscillations in the converter station. The first damping controller and the second damping controller may be separate units or an integrated unit of a damping controller comprising both the first damping controller and the second damping controller.

The term gain is to be understood as a variable relation between a current, and more particularly a current difference, and a voltage, thus resembling a virtual resistance. The gain is introduced by means of the regulator. Each of the damping controllers comprises the regulator. For example, the gain is the proportional gain in the case of the proportional (P) controller.

The first and second damping controllers in the converter station may be configured to operate in a DQ frame. The first damping controller further may be configured to determine the first current differences by operating on respective D current components and Q current components of the phase currents of the first and the second voltage source converters. Similarly, the second damping controller may further be configured to determine the second current difference by operating on respective D current components and Q current components of the phase currents of the second and the first voltage source converters. Thereby, the first and second current differences comprise D and Q difference current components. The first current differences may be determined as the D and Q current components of the phase currents of the second voltage source converter subtracted from the D and Q current components, respectively, of the phase currents of the first voltage source converter. Similarly, the second current differences may be determined as the D and Q current components of the phase currents of the first voltage source converter subtracted from the D and Q current components, respectively, of the phase currents of the second voltage source converter.

The first and second damping controllers may be configured to multiply the D and Q difference current components with the respective gain provided by the regulators to generate the respective first and second damping control signals in the DQ frame. The regulators of the first damping controller and the second damping controller may be configured to have equal gain. However, a skilled person will understand that it is possible to use different gains for the first damping controller and for the second damping controller.

The first converter control unit in the converter station may be configured to combine the first damping control signals in the DQ frame with corresponding components of the converter reference voltage for the first voltage source converter in order to provide the modified converter reference voltages for the first voltage source converter. The second converter control unit in the converter station may be configured to combine the second damping control signals in the DQ frame with corresponding components of the converter reference voltage for the second voltage source converter in order to provide the modified converter reference voltages for the second voltage source converter.

The first and second damping controllers in the converter station may be configured to operate in an ABC frame, i.e. to operate directly on the phase currents. The first damping controller may be configured to determine the first current differences and the second damping controller further may be configured to determine the second current differences by operating on respective A current components, B current components and C current components of the phase currents of the first and the second voltage source converters. The first current difference may be determined as the A, B and C current components of the phase current of the second voltage source converter subtracted from the A, B and C current components, respectively, of the phase currents of the first voltage source converter. Similarly, the second current differences may be determined as the A, B and C current components of the phase currents of the first voltage source converter subtracted from the A, B and C current components, respectively, of the phase currents of the second voltage source converter.

The first and second damping controllers may be configured to multiply the A, B and C difference current components with the respective gain provided by the regulators to generate the respective first and second damping control signals in the ABC frame. The regulators of the first damping controller and the second damping controller may be configured to have equal gain. However, the person skilled in the art will understand that it is possible to use different gains for the first damping controller and for the second damping controller.

The first converter control unit and the second converter control unit in the converter station may be configured to combine the A, B, and C components of the first damping control signals with the corresponding components of the converter reference voltage for the first voltage source converter in order to provide the modified converter reference voltages for the first voltage source converter. The second converter control unit in the converter station may be configured to combine the A, B, and C components of the second damping control signals with corresponding components of the converter reference voltage in the ABC frame for the second voltage source converter in order to provide the modified converter reference voltages for the second voltage source converter.

According to a second aspect, a method is provided for controlling a converter station comprising at least two converters, including a first voltage source converter and a second voltage source converter. The converter station is configured to be connected to a DC system and to an AC system. The DC system has two poles and the AC system has multiple phases. The first voltage source converter and the second voltage source converter are connectable to a respective one of the two poles and are connected to each other. The method comprises obtaining phase currents of the first voltage source converter and phase currents of the second voltage source converter; and determining first current differences by subtracting the phase currents of the second voltage source converter from the phase currents of the first voltage source converter, and second current differences by subtracting the phase currents of the first voltage source converter from the phase currents of the second voltage source converter. The method further comprises multiplying each of the first current differences and the second current differences, respectively, with a respective gain for generating first damping control signals and second damping control signals, respectively; and combining the first damping control signals with a converter reference voltage of the first voltage source converter and combining the second damping control signals with a converter reference voltage of the second voltage source converter, thereby providing respective modified converter reference signals for the first voltage source converter and the second voltage source converter, for damping of oscillations generated between the converters of the two poles in the converter station.

The method for controlling a converter station may comprise determining DQ frame components of the phase currents, in particular determining the D current component and Q current component of the phase currents of the first voltage source converter, and determining the D current component and Q current component of the phase currents of the second voltage source converter. Then, the first current differences and the second current differences are determined by operating on respective D current components and Q current components of the phase currents of the first and the second voltage source converters. Determining the differences may comprise determining the first current differences between the D current components of the phase currents and between the Q current components of the phase currents to generate the first damping control signal for each component. Determining the differences may further comprise determining the second current differences between the D components of the phase currents and between the Q components of the phase currents to generate the second damping control signal for each component. The combining may comprise, for each component in the DQ frame combining the respective D and Q components of the first and second damping control signals with corresponding D and Q components of the respective first and second converter reference voltages in the DQ frame to provide the respective modified converter reference signals in the DQ frame for the first voltage source converter and the second voltage source converter.

The method for controlling a converter station, wherein combining D and Q components of the first damping control signal in DQ frame with D and Q components of the converter reference voltage of the first voltage source converter may comprise adding the D and Q components of the first damping control signal in the DQ frame to the D and Q components of the converter reference voltage in the DQ frame , and wherein combining the D and Q components of the second damping control signal in DQ frame with D and Q components of the converter reference voltage of the second voltage source converter may comprise adding the D and Q components of the second damping control signal in the DQ frame to the D and Q components of the converter reference voltage in the DQ frame.

The method for controlling a converter station, may comprise determining the first current differences and the second current differences by operating on respective A current components, B current components and C current components of the phase currents of the first and the second voltage source converters. The first current differences may be determined as the A, B and C current components of the phase currents of the second voltage source converter being subtracted from the A, B and C current components, respectively, of the phase currents of the first voltage source converter. The second current differences may be determined as the A, B and C current components of the phase currents of the first voltage source converter being subtracted from the A, B and C current components, respectively, of the phase currents of the second voltage source converter. The combining may comprise combining the respective A, B and C components of the damping control signals with corresponding A, B and C components of the respective converter reference voltage.

The method for controlling the converter station, wherein the operation of multiplying each of the first current differences and the second current differences, respectively, with a respective gain further comprises applying an equal gain. However, a skilled person will understand that it is possible to use different gains for generating the first damping control signal and the second damping control signal.

According to a third aspect there is provided a computer program product comprising computer readable instructions which, when executed by a device having processing capability, causes the device to carry out the method of the second aspect.

### Brief description of the drawings

These and other aspects will now be described in more detail with reference to the appended drawings showing embodiments.
Figure 1 schematically shows a converter station comprising two converters;
Figures 2a and 2b schematically show a first damping controller and a second damping controller respectively, when configured to operate in an ABC frame;
Figures 3a and 3b schematically show a first converter control unit and a second converter control unit configured to determine modified converter reference voltages in the ABC frame for the first voltage source converter and the second voltage source converter, respectively;
Figures 4a and 4b schematically show a first damping controller and a second damping controller respectively, when configured to operate in a DQ frame;
Figures 5a and 5b schematically show a first converter control unit and a second converter control unit configured to determine modified converter reference voltages in the DQ frame for the first voltage source converter and the second voltage source converter, respectively;
Figure 6 schematically shows a converter;
Figure 7 shows a flow chart for a method for controlling a converter station comprising at least two converters;
Figure 8 illustrates a computer program product.

All the figures are schematic, not necessarily to scale, and generally only show parts which are necessary in order to elucidate the embodiments, wherein other parts may be omitted or merely suggested. Like reference numerals refer to like elements throughout the description.

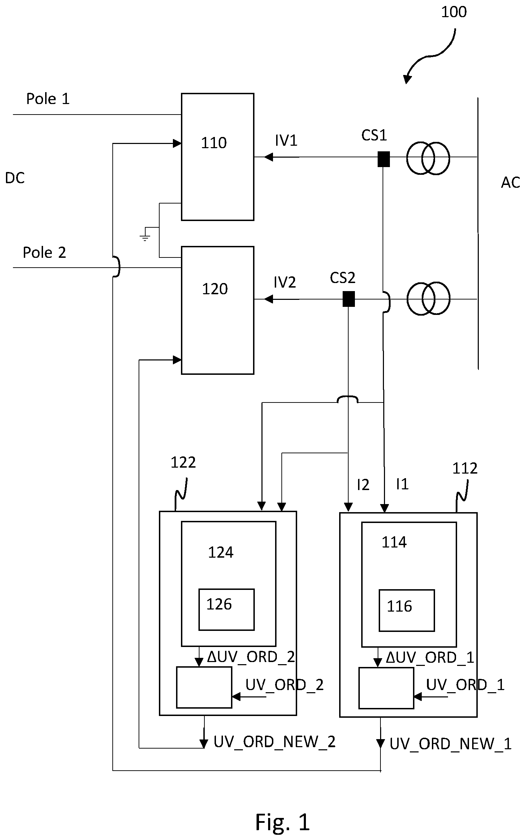

The subject-matter of the independent claims is reflected by the embodiment shown in fig. 1. The other figures provide further details for understanding the invention.

### Detailed description

The present aspects will now be described more fully hereinafter with reference to the accompanying drawings, in which currently preferred embodiments are shown. These aspects may, however, be embodied in many different forms and should not be construed as limited to the embodiments set forth herein; rather, these embodiments are provided for thoroughness and completeness, and fully convey the scope of the present aspects to those skilled in art.

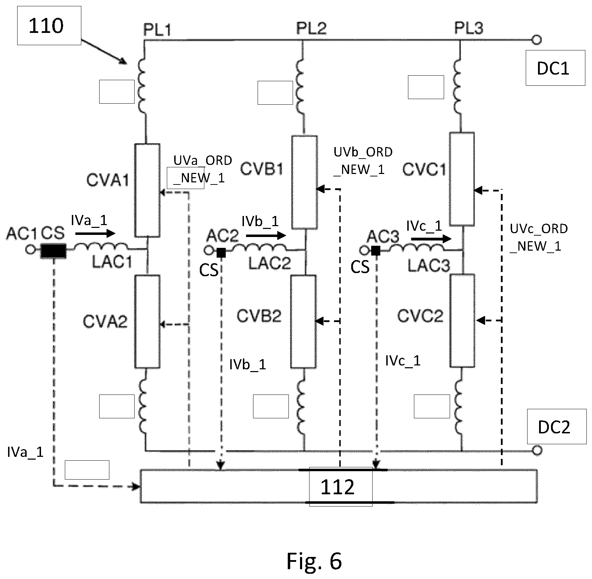

Referring to figure 1, according to an embodiment thereof a converter station 100 comprises two converters, including a first voltage source converter 110 and a second voltage source converter 120. The converter station 100 is configured to be connected to a direct current (DC) system and to an alternating current (AC) system. The DC system has two poles and the AC system has multiple phases. The first voltage source converter 110 and the second voltage source converter 120 are connectable to a respective one of the two DC poles, i.e., Pole 1 and Pole 2. The first voltage source converter 110 and the second voltage source converter 120 are also connected to each other. The converter station 100 further comprises a first converter control unit 112 and a second converter control unit 122 connected to the first voltage source converter 110 and to the second voltage source converter 120, respectively. The first converter control unit 112 and the second converter control unit 122 may be a single control unit or integrated into a single control unit. The single control unit may be configured to perform operations of both the first converter control unit 122 and the second converter control unit 122. Alternatively, the first converter control unit 112 and the second converter control unit 122 are standalone units. The first converter control unit 112 and the second converter control unit 122 are configured to obtain phase currents, commonly denoted IV1 in figure 1, of the first voltage source converter 110 and phase currents, commonly denoted IV2, of the second voltage source converter 120. The converter station 100 further comprises a first group of current sensors CS1 configured to sense the phase currents IV1 of the first voltage source converter 110, and a second group of current sensors CS2 configured to sense the phase currents IV2 of the second voltage source converter 120. The first group of current sensors CS1 comprises three current sensors for sensing the phase currents from each phase leg (described in more detail in conjunction with figure 6) of the first voltage source converter 110. The second group of current sensors CS2 is similarly arranged with respect to the second voltage source converter 120. The first and second group of current sensors CS1, CS2 are connected to the first converter controller 112 as well as to the second converter controller 122. As an alternative, the first group of current sensors CS1 may be connected to merely the first converter control unit 112, and the second group of current sensors CS2 may be connected to merely the second converter control unit 122. Further, the first converter control unit 112 and the second converter control unit 122 are interconnected. The first converter control unit 112 and the second converter control unit 122 may provide the respective sensed phase currents IV1 and IV2 to each other.

The first converter control unit 112 and the second converter control unit 122 further comprises a first damping controller 114 and a second damping controller 124, respectively. Each one of the first damping controller 114 and the second damping controller 124 comprises a regulator 116, 126. The first damping controller 114 is configured to determine first current differences by subtracting the phase currents IV2 of the second voltage source converter 120 from the phase currents IV1 of the first voltage source converter 110. The second damping controller 124 is configured to determine second current differences by subtracting the phase currents IV1 of the first voltage source converter 110 from the corresponding phase currents IV2 of the second voltage source converter 120. The first and second damping controllers 114, 124 are configured to multiply each of the first current differences and the second current differences, respectively, with a respective gain for generating first damping control signals ΔUV_ORD_1and second damping control signals ΔUV_ORD_2, respectively. The gain is introduced by the respective regulators 116, 126 in the first damping controller 114 and the second damping controller 124. The gain introduced by the regulator 116 in the first damping controller 114 is a variable relation between the first current differences and the first damping control signals ΔUV_ORD_1, which are voltages, the gain thus resembling a first virtual resistance. Similarly, the gain introduced by the regulator 126 in the second damping controller 124 ΔUV_ORD_2resembles a second virtual resistance. For example, when the damping controller 114, 124 is a proportional (P) controller, i.e. the regulator 116, 126 is a P regulator, the variable virtual resistance is the proportional gain. The regulators 116, 126 of the first damping controller 114 and the second damping controller 124 may be configured to have equal gain, i.e. equal virtual resistance. The first converter control unit 112 is further configured to combine each of the first damping control signals ΔUV_ORD_1with a converter reference voltage UV_ORD_1 of the first voltage source converter 110, in order to provide modified converter reference voltages UV_ORD_NEW_1 for the first voltage source converter 110. The second converter control unit 122 is further configured to combine each of the second damping control signals ΔUV_ORD_2 with a converter reference voltage UV_ORD_2 of the second voltage source converter 120 in order to provide modified converter reference voltages UV_ORD_NEW_2 for the second voltage source converter 120. The converter reference voltages UV_ORD_1, UV_ORD_2 may be generated by an external device and received at the respective converter control units 112, 122. Alternatively, the converter reference voltages UV_ORD_1 and UV_ORD_2 may be generated internally of the respective converter control units 112, 122. In the latter case, each of the converter control units 112, 122 may include a respective waveform control module that generates the respective converter reference voltages, UV_ORD_1 and UV_ORD_2. The first voltage source converter 110 and the second voltage source converter 120 are provided with the respective modified converter reference voltages, UV_ORD_NEW_1 and UV_ORD_NEW_2.

As it is known from the prior art, when both the converters 110, 120, which are connected to the same AC bus, are operating at no inner current control such as frequency voltage control, virtual synchronous machine control or grid forming control, the low frequency current components including DC component can be easily excited and flow on the low impedance circuit path, which is from one converter directly to another converter on the AC side, and two poles on the DC sideThe modified converter reference voltages UV_ORD_NEW_1 for the first voltage source converter 110 and the modified converter reference voltages UV_ORD_NEW_2 for the second voltage source converter 120 are used to reduce or eliminate the deviations in the converter station 100. Thereby, the oscillations in the converter station 100 or between the first voltage source converter 110 and the second voltage source converter 120 are reduced or eliminated without affecting the active and reactive power exchange between the AC system and respective converter 110, 120.

Referring to figure 6, according to an embodiment of the converter station, the first voltage source converter 110 comprises three phase legs, PL1, PL2 and PL3. Each phase leg PL1, PL2, PL3 comprises an upper arm and a lower arm, which in turn comprises a first converter valve CVA1, CVB1, CVC1 and a second converter valve CVA2, CVB2, CVC2, respectively. Furthermore, the first voltage source converter 110 comprises a current sensor CS connected at a first AC terminal AC1 between the upper arm and the lower arm of the first phase leg PL1. Similarly, current sensors CS are arranged at second and third AC terminals AC2, AC3 as well, those AC terminals being provided between the upper arm and the lower arm of the second and third phase legs PL2, PL3, respectively. The current sensors CS are comprised in the above-defined first group of current sensors CS1. The current sensors are arranged to sense the individual phase currents IVa_1, IVa_2, IVa_3, below also denominated A, B, and C current components. Alternatively, current sensors may be arranged to sense the arm currents of each arm, and the phase currents are then calculated from the arm currents. The first converter control unit 112 is connected with the converter valves CVA1, CVB1, CVC1, CVA2, CVB2, CVC2. The modified converter reference voltages UV_ORD_NEW_1 comprise three modified converter reference voltages UVa_ORD_NEW_1, UVb_ORD_NEW_1, UVc_ORD_NEW_1, one for each phase A, B, and C. The first converter control unit 112 is configured to provide the modified converter reference voltage UVa_ORD_NEW_1 for phase A to the first phase leg PL1, and more particularly to the first and second converter valves CVA1, CVA2 of the first phase leg PL1. Similarly, the first converter control unit 112 is configured to provide the modified converter reference voltages UVb_ORD_NEW_1, UVc_ORD_NEW_1 for the B and C phases to the first and second converter valves CVB1, CVC1, CVB2, CVC2 of the second and third phase legs PL2, PL3. The second voltage source converter 120 is similarly implemented as the first voltage source converter 110, though not shown in figure 6 for reasons of simplicity.

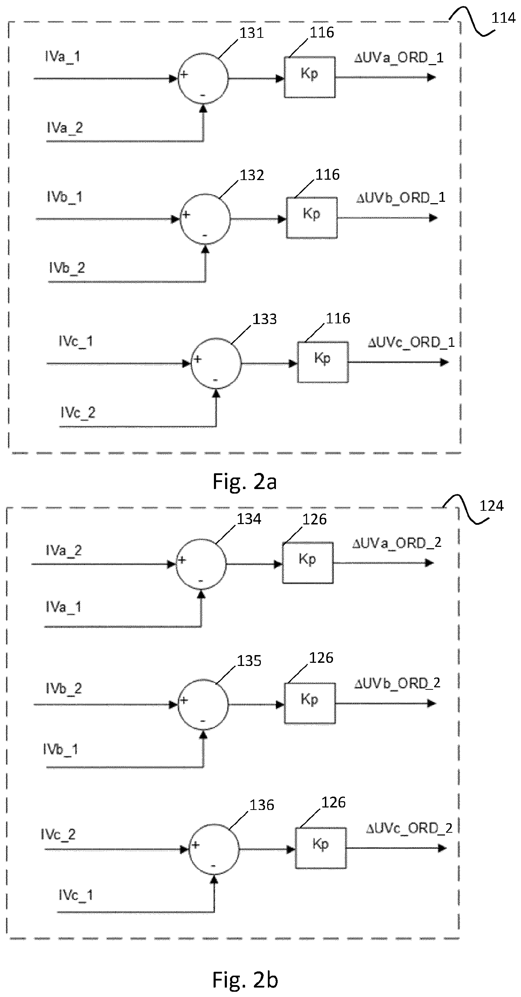

According to an embodiment of the converter station 100, as shown in figures 2a and 2b the damping controllers 114, 124 are configured to operate in an ABC frame. The first damping controller 114 comprises first, second and third subtractors 131, 132, 133, which are connected with a respective input of the regulator 116. Similarly, the second damping controller 124 comprises fourth, fifth, and sixth subtractors 134, 135, 136, which are connected with respective inputs of the regulator 126. The first to third subtractors 131-133 are employed to determine the first current differences, by receiving the A current components IVa_1, IVa_2, B current components IVb_1, IVb_2, and C current components IVc_1, IVc_2, and subtracting the A, B, and C current components IVa_2, IVb_2, IVc_2 of the second voltage source converter 120 from the A, B, and C current components IVa_1, IVb_1, IVc_1 of the first voltage source converter 110. The second current differences in ABC frame are determined by means of the fourth to sixth subtractors 134-136, by subtracting the A, B, and C components IVa_1, IVb_1, IVc_1 of the first voltage source converter 110 from the A, B, and C components IVa_2, IVb_2, IVc_2 of the second voltage source converter 120.

The first damping controller 114 is further configured to multiply the A, B and C difference current components (IVa_1- IVa_2), (IVb_1- IVb_2), (IVc_1- IVc_2), thus constituting the first current differences, with the gain Kp provided by the regulator 116 to generate respective A, B and C signal components ΔUVa_ORD_1, ΔUVb_ORD_1, ΔUVc_ORD_1 constituting the first damping control signals. Similarly, the second damping controller 124 is further configured to multiply the A, B and C difference current components (IVa_2 - IVa_1), (IVb_2 - IVb_1), (IVc_2 - IVc_1) with the gain Kp provided by the regulator 126 to generate respective A, B and C signal components ΔUVa_ORD_2, ΔUVb_ORD_2, ΔUVc_ORD_2 constituting the second damping control signals.

The gain of the regulators 116, 126 is indicated as Kp. The regulators 116, 126 are indicated to have equal gain Kp. However, person skilled in the art will understand that it is possible to have different gains for each of the first damping controller 114 and the second damping controller 124. The first damping control signals ΔUVa_ORD_1, ΔUVb_ORD_1, ΔUVc_ORD_1 and the second damping control signals ΔUVa_ORD_2, ΔUVb_ORD_2, ΔUVc_ORD_2 are then used by the first converter control unit 112 and the second converter control unit 122, respectively, to modify the converter reference voltages in the ABC frame for the first voltage source converter 110 and the second voltage source converter 120.

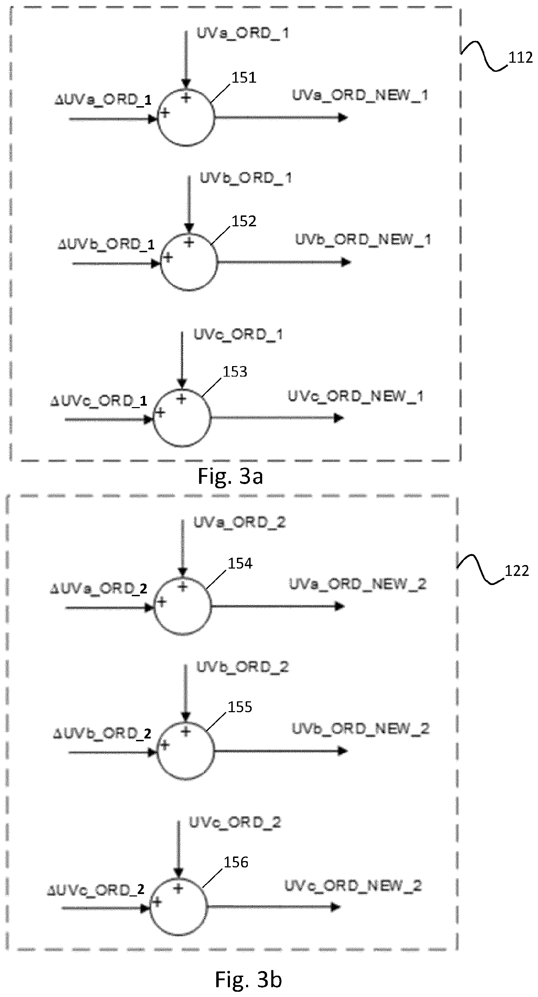

As shown in figures 3a and 3b, the first converter control unit 112 and the second converter control unit 122 are configured to determine modified converter reference voltages in the ABC frame for the first voltage source converter 110 and the second voltage source converter 120, respectively. The first converter control unit 112 comprises first, second and third combiners 151, 152, 153, which are connected with the regulator 116 for receiving a respective one of the A, B, and C signal components ΔUVa_ORD_1, ΔUVb_ORD_1, ΔUVc_ORD_1. Similarly, the second converter control unit 122 comprises fourth, fifth, and sixth combiners 154, 155, 156 connected with the regulator 126 for receiving a respective one of the A, B, and C signal components ΔUVa_ORD_2, ΔUVb_ORD_2, ΔUVc_ORD_2. Additionally, the first, second and third combiners 151, 152, 153 receive corresponding A, B, and C components UVa_ORD_1, UVb_ORD_1, UVc_ORD_1 of the converter reference voltage for the first voltage source converter 110, and combine them with the respective A, B, and C signal components in order to provide A, B and C components of the modified converter reference voltage UVa_ORD_NEW_1, UVb_ORD_NEW_1, UVc_ORD_NEW_1 for the first voltage source converter 110. Similarly, the fourth, fifth, and sixth combiners 154, 155, 156 additionally receive A, B, and C components UVa_ORD_2, UVb_ORD_2, UVc_ORD_2 of the converter reference voltage for the second voltage source converter 120and combine them with the respective A, B and C signal components ΔUVa_ORD_2, ΔUVb_ORD_2, ΔUVc_ORD_2 in order to provide A, B and C components of the modified converter reference voltage UVa_ORD_NEW_2, UVb_ORD_NEW_2, UVc_ORD_NEW_2 for the second voltage source converter 120. More particularly, in this embodiment the combining is performed as an addition. The A, B and C components, or phase voltages, UVa_ORD_NEW_1, UVb_ORD_NEW_1, UVc_ORD_NEW_1, UVa_ORD_NEW_2, UVb_ORD_NEW_2, UVc_ORD_NEW_2 of the modified converter reference voltages for the first voltage source converter 110 and the second voltage source converter 120 are respectively provided to the converter valves of first voltage source converter 110 and the second voltage source converter 120.

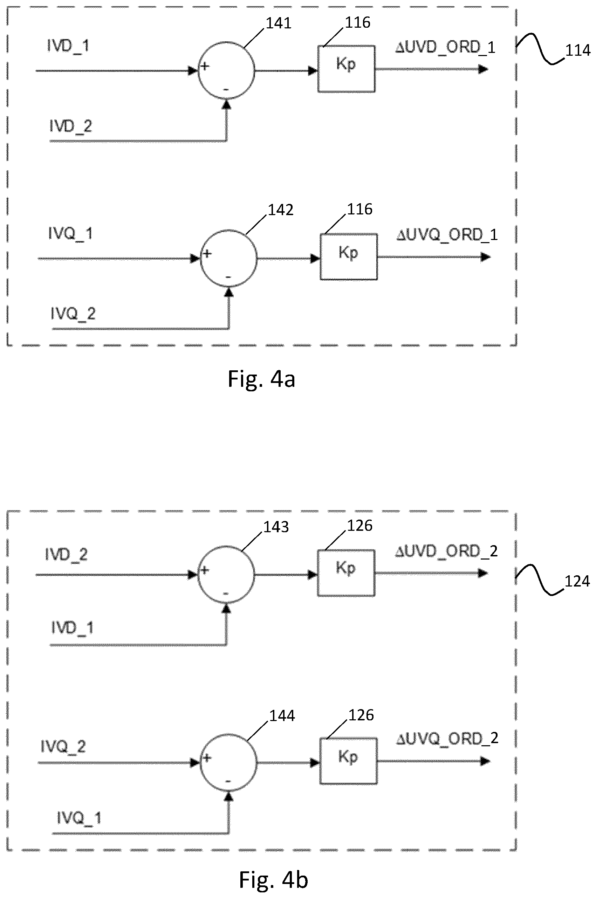

According to an embodiment of the converter station 100, as shown in figures 4a and 4b the damping controllers 114, 124 are configured to operate in a DQ frame. The first damping controller 114 comprises first and second subtractors 141, 142, one for each respective pair of the D and Q components of the phase currents IV1, IV2. The first and second subtractors 141, 142, are connected with a respective input of the regulator 116. Similarly, the second damping controller 124 comprises third and fourth subtractors 143, 144, for handling the D current components, and the Q current components, respectively. The third and fourth subtractors 143, 144 are connected with respective inputs of the regulator 126. The first and second damping controllers 114, 124 are configured to determine the D current components IVD_1, IVD_2, and Q current components IVQ_1, IVQ_2, of the phase currents IV1, IV2 of the first and the second voltage source converters 110, 120. The first damping controller 114 is further configured to determine the first current differences, and the second damping controller 124 is further configured to determine the second current differences, by operating on the respective D current components and Q current components of the AC currents I1, I2 of the first and second voltage source converters 110, 120, by means of the first to fourth subtractors 141-144. The first and second current differences thereby comprising D and Q difference current components. The first current differences in DQ frame are determined by means of the first and second subtractors 141, 142, by subtracting the D, and Q components of the phase currents of the second voltage source converter 120 from the D, and Q components of the phase currents of the first voltage source converter 110, and they are expressed as (IVD_1 - IVD_2) and (IVQ_1 - IVQ_2). Similarly, the second current differences in DQ frame are determined by means of the third and fourth subtractors 143, 144, by subtracting the D, and Q components of the phase currents of the first voltage source converter 110 from the DQ components of the phase currents of the second voltage source converter 120, and they are expressed as (IVD_2 - IVD_1) and (IVQ_2 - IVQ_1).

The first damping controller 114 is further configured to multiply the D and Q difference current components, (IVD_1 - IVD_2) and (IVQ_1 - IVQ_2), constituting the first current differences, with the gain Kp provided by the regulator 116 to generate respective D and Q signal components ΔUVD_ORD_1, ΔUVQ_ORD_1 constituting the first damping control signals. Similarly, the second damping controller 124 is further configured to multiply the D and Q difference current components (IVD_2 - IVD_1) and (IVQ_2 - IVQ_1) with the gain Kp provided by the regulator 126 to generate respective D and Q signal components ΔUVD_ORD_2, ΔUVQ_ORD_2 constituting the second damping control signals.

The gain of the regulators 116, 126 is indicated as Kp. The regulators 116, 126 are indicated to have equal gain Kp. However, person skilled in the art will understand that it is possible to have different gains for each of the first damping controller 114 and the second damping controller 124. The first damping control signals ΔUVD_ORD_1, ΔUVQ_ORD_1 and the second damping control signals ΔUVD_ORD_2, ΔUVQ_ORD_2 are then used by the first converter control unit 112 and the second converter control unit 122, respectively, to modify the converter reference voltages in the DQ frame for the first voltage source converter 110 and the second voltage source converter 120.

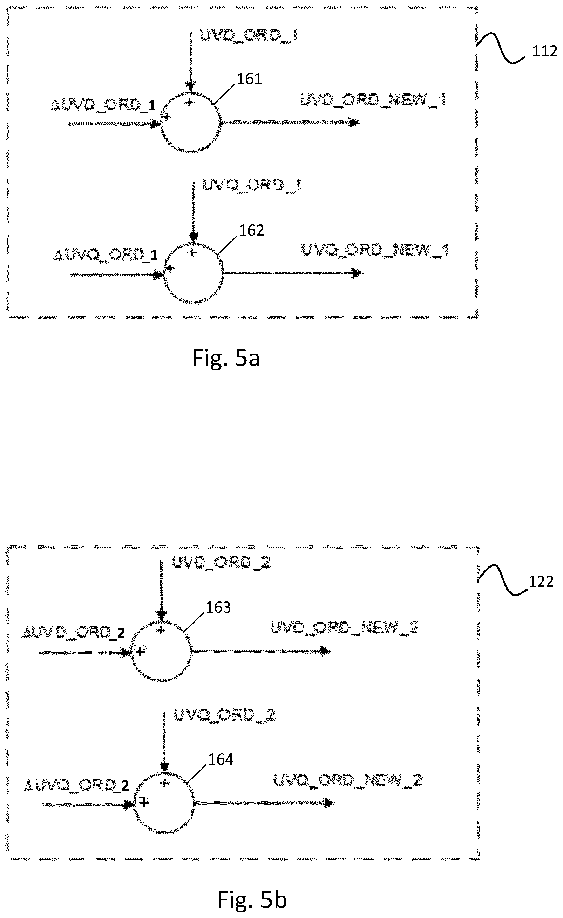

As shown in figures 5a and 5b the first converter control unit 112 and the second converter control unit 122 are configured to determine modified converter reference voltages in the DQ frame for the first voltage source converter 110 and the second voltage source converter 120, respectively. The first converter control unit 112 comprises first, and second combiners 161, 162 connected with the regulator 116 for receiving a respective one of the D and Q signal components ΔUVD_ORD_1, ΔUVQ_ORD_1. Similarly, the second converter control unit 122 comprises third and fourth combiners 163, 164 connected with the regulator 126 for receiving a respective one of the D and Q signal components ΔUVD_ORD_2, ΔUVQ_ORD_2. Additionally, the first and second combiners 161, 162 receive corresponding D and Q components UVD_ORD_1, UVQ_ORD_1 of the converter reference voltage for the first voltage source converter 110, and combine them with the respective D and Q signal components in order to provide D and Q components of the modified converter reference voltage UVD_ORD_NEW_1, UVQ_ORD_NEW_1 for the first voltage source converter 110. Similarly, the third and fourth combiners 163, 164 additionally receive D and Q components UVD_ORD_2, UVQ_ORD_2 of the converter reference voltage for the second voltage source converter 120 and combine them with the respective D and Q signal components ΔUVD_ORD_2, ΔUVQ_ORD_2 in order to provide D and Q components of the modified converter reference voltage UVD_ORD_NEW_2, UVQ_ORD_NEW_2 for the second voltage source converter 120.

More particularly, in this embodiment the combining is performed as an addition, i.e. the first to fourth combiners 161-164 are adders.

The D and Q components of the modified converter reference voltage for the first voltage source converter 110 and for the second voltage source converter 120 are then transformed back to ABC frame by the first and second converter control units 112, 122 and provided as phase voltages UVa_ORD_NEW_1, UVb_ORD_NEW_1, UVc_ORD_NEW_1, UVa_ORD_NEW_2, UVb_ORD_NEW_2, UVc_ORD_NEW_2 to the converter valves of the first and second voltage source converters 110, 120.

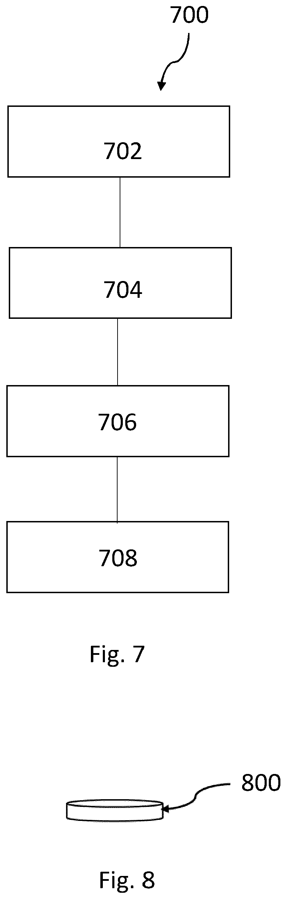

Figure 7 shows a flow chart for a method 700 for controlling a converter station comprising at least two converters, including a first voltage source converter and a second voltage source converter. The converter station is configured to be connected to a DC system and to an AC system. The DC system has two poles and the AC system has multiple phases. The first voltage source converter and the second voltage source converter are connectable to a respective one of the two poles and are connected to each other.

The method 700 for controlling a converter station comprises, in box 702, receiving phase currents of the first voltage source converter and phase currents of the second voltage source converter. Further the method comprises, in box 704, determining first current differences by subtracting the phase currents of the second voltage source converter from the phase currents of the first voltage source converter, and determining second current differences by subtracting the phase currents of the first voltage source converter from the phase currents of the second voltage source converter. The method further comprises multiplying each of the first current differences and the second current differences, respectively, with a respective gain for generating first damping control signals and second damping control signals, respectively, in box 706. Furthermore, in box 708, the method comprises combining the first damping control signals with a converter reference voltage of the first voltage source converter and combining the second damping control signals with a converter reference voltage of the second voltage source converter, thereby providing respective modified converter reference signals for the first voltage source converter and the second voltage source converter.

In an embodiment, alternatively or additionally, the method 700 for controlling a converter station, may further comprise, in box 704, determining or receiving DQ frame components of the phase currents, in particular, determining the D current component IVD_1 and Q current component IVQ_1 of the phase currents of the first voltage source converter 110. Further, determining the D current component IVD_2 and Q current component IVQ_2 of the phase currents of the second voltage source converter 120, and determining the first current differences and the second current differences by operating on respective D current components and Q current components of the first and the second voltage source converters. Determining the differences may comprise determining the first current difference (IVD_1 - IVD_2), (IVQ_1 - IVQ_2) between the D components of the phase currents and between the Q components of the phase currents. Determining the differences may further comprise determining the second current differences (IVD_2 - IVD_1), (IVQ_2 - IVQ_1) between the D components of the phase currents and between the Q components of the phase currents. The method may further comprise, in box 706, multiplying the first current differences (IVD_1 - IVD_2), (IVQ_1 - IVQ_2) with a respective gain to generate the first damping control signal ΔUVD_ORD_1, ΔUVQ_ORD_1 for each component. Further, multiplying the second current differences (IVD_2 - IVD_1), (IVQ_2 - IVQ_1) with a respective gain to generate the second damping control signal ΔUVD_ORD_2, ΔUVQ_ORD_2 for each component. The combining, in box 708, may further comprise combining the D and Q components ΔUVD_ORD_1, ΔUVQ_ORD_1 of the first damping control signals with D and Q components UVD_ORD_1, UVQ_ORD_1 of the converter reference voltage of the first voltage source converter 110, and combining the D and Q components ΔUVD_ORD_2, ΔUVQ_ORD_2 of the second damping control signals with D and Q components UVD_ORD_2, UVQ_ORD_2 of the converter reference voltage of the second voltage source converter 120 to provide the respective modified converter reference signals UVD_ORD_NEW_1, UVQ_ORD_NEW_1, UVD_ORD_NEW_2, UVQ_ORD_NEW_2 in the DQ frame for the first voltage source converter 110 and the second voltage source converter 120.

In yet another embodiment, the method 700 for controlling a converter station may further comprise, in box 704, the individual phase currents directly, i.e. the A current component IVa_1, the B current component IVb_1 and the C current component IVc_1 of the phase currents of the first voltage source converter 110, and the A current component IVa_2, the B current component IVb_2, and the C current component IVc_2 of the phase currents of the second voltage source converter 120. Thus, determining the first and second current differences comprises determining first and second A, B, and C component differences between the A, B, and C current components (IVa_1 - IVa_2), (IVb_1 - IVb_2), (IVc_1 - lVc_2), (IVa_2 - IVa_1), (IVb_2 - IVb_1), (IVc_2 - IVc_1). The multiplying, box 706, may further comprise multiplying the first A, B, and C component differences (IVa_1 - IVa_2), (IVb_1 - IVb_2), (IVc_1 - IVc_2), respectively with the gain to generate the first damping control signals ΔUVa_ORD_1, ΔUVb_ORD_1, ΔUVc_ORD_1. And further multiplying the second A, B, and C component differences (IVa_1 - IVa_2), (IVb_1 - IVb_2), (IVc_1 - IVc_2), respectively, with a gain to generate the second damping control signals ΔUVa_ORD_2, ΔUVb_ORD_2, ΔUVc_ORD_2. The operation of combining, box 708, further comprises, for each component in the ABC frame, combining the respective A, B and C components of the damping control signals with corresponding A, B and C components of the respective converter reference voltages to provide the respective modified converter reference signals in the ABC frame for the first voltage source converter 110 and the second voltage source converter 120. The first damping control signals ΔUVa_ORD_1, ΔUVb_ORD_1, ΔUVc_ORD_1 are combined with corresponding A, B, and C components of the converter reference voltage UVa_ORD_1, UVb_ORD_1, UVc_ORD_1 in the ABC frame for the first voltage source converter in order to provide the modified converter reference voltage UVa_ORD_NEW_1, UVb_ORD_NEW_1, UVc_ORD_NEW_1 for the first voltage source converter 110. Similarly, the second damping control signals ΔUVa_ORD_2, ΔUVb_ORD_2, ΔUVc_ORD_2 are combined with corresponding A, B, and C components of the converter reference voltage UVa_ORD_2, UVb_ORD_2, UVc_ORD_2 for the second voltage source converter 120 in order to provide the modified converter reference voltages UVa_ORD_NEW_2, UVb_ORD_NEW_2, UVc_ORD_NEW_2 for the second voltage source converter 120. Figure 8 most schematically illustrates that as an aspect of the present disclosure, there is provided a computer program product 800 comprising instructions which, when downloaded into and/or executed by a device having processing capability, for instance a converter station, causes the device to carry out the method set forth above.

The person skilled in the art realizes that the present invention by no means is limited to the preferred embodiments described above. On the contrary, many modifications and variations are possible within the scope of the appended claims. For example, the converter control units performing the modification of the converter reference voltages for the voltage source converters are shown as separate independent devices. However, they can be provided as a single converter control unit performing all the functions of the independent converter units, or as multiple converter control units. Thus, the embodiments presented in the disclosure are for exemplary purpose and should not be construed as limiting the scope.

## Claims

1. A converter station (100) comprising at least two converters, including a first voltage source converter (110) and a second voltage source converter (120), wherein
the converter station is configured to be connected to a bipolar direct current, DC, system and to an alternating current, AC, system, wherein the DC system has two poles and the AC system has multiple phases, and wherein
the first voltage source converter and the second voltage source converter are connectable to a respective one of the two poles and are connected to each other; the converter station further comprising
a first converter control unit (112) and a second converter control unit (122) connected to the first voltage source converter and to the second voltage source converter, respectively, wherein
the first converter control unit and the second converter control unit are configured to obtain phase currents of the first voltage source converter and phase currents of the second voltage source converter, wherein
the first converter control unit and the second converter control unit further comprises a first damping controller (114) and a second damping controller (124), respectively, wherein
each one of the first damping controller and the second damping controller comprises a regulator (116, 126), wherein
the first damping controller is configured to determine first current differences by subtracting the phase currents of the second voltage source converter from the phase currents of the first voltage source converter, and the second damping controller is configured to determine second current differences by subtracting the phase currents of the first voltage source converter from the phase currents of the second voltage source converter,
wherein the first and second damping controllers are configured to multiply the first current differences and the second current differences, respectively, with a respective gain for generating first damping control signals and second damping control signals, respectively, wherein the gain is introduced by means of the regulator, and
wherein the first converter control unit is further configured to combine the first damping control signals with a converter reference voltage of the first voltage source converter and the second converter control unit is further configured to combine the second damping control signals with a converter reference voltage of the second voltage source converter, in order to provide respective modified converter reference voltages for the first voltage source converter and the second voltage source converter, for damping of oscillations generated between the converters.

2. The converter station according to claim 1, wherein the first and second damping controllers (114, 124) are configured to operate in a DQ frame, wherein the first damping controller further is configured to determine the first current differences and the second damping controller is further configured to determine the second current differences by operating on respective D current components and Q current components of the phase currents of the first and the second voltage source converters (110, 120), the first and second current differences thereby comprising D and Q difference current components.

3. The converter station according to claim 2, wherein the first and second damping controllers (114, 124) are configured to multiply the D and Q difference current components with the respective gain provided by the regulators (116, 126) to generate the respective first and second damping control signals in DQ frame.

4. The converter station according to claim 3, wherein the first converter control unit (112) and the second converter control unit (122) are configured to combine the respective first and second damping control signals in DQ frame with the respective converter reference voltages in DQ frame for each of the first voltage source converter (110) and the second voltage source converter (120) in order to provide the respective modified converter reference voltages for the first voltage source converter and the second voltage source converter.

5. The converter station according to claim 1, wherein the first and second damping controllers are configured to operate in a ABC frame, wherein the first damping controller (114) is configured to determine the first current differences and the second damping controller is further configured to determine the second current differences by operating on respective A current components, B current components and C current components of the phase currents of the first and the second voltage source converters (110, 120), the first and second current differences thereby comprising A, B and C difference current components.

6. The converter station according to claim 5, wherein the first and second damping controllers are configured to multiply the A, B and C difference current components with the gain provided by the regulators (116, 126) to generate the respective first and second damping control signals in ABC frame.

7. The converter station according to claim 6, wherein the first converter control unit (112) and the second converter control unit (122) are configured to combine A, B and C components of the respective first and second damping control signals with the corresponding A, B, and C components of the respective converter reference voltages for each of the first voltage source converter and the second voltage source converter in order to provide the respective modified converter reference voltages for the first voltage source converter (110) and the second voltage source converter (120).

8. A method for controlling a converter station comprising at least two converters, including a first voltage source converter (110) and a second voltage source converter (120), wherein
the converter station (100) is configured to be connected to a bipolar DC system and to an AC system, wherein the DC system has two poles and the AC system has multiple phases, and wherein
the first voltage source converter and the second voltage source converter are connectable to a respective one of the two poles and are connected to each other,
the method comprising:
obtaining phase currents of the first voltage source converter and phase currents of the second voltage source converter,
determining first current differences by subtracting the phase currents of the second voltage source converter from the phase currents of the first voltage source converter, and second current differences by subtracting the phase currents of the first voltage source converter from the phase currents of the second voltage source converter,
multiplying each of the first current differences and the second current differences, respectively, with a respective gain for generating first damping control signals and second damping control signals, respectively, and
combining the first damping control signals with a converter reference voltage of the first voltage source converter and combining the second damping control signals with a converter reference voltage of the second voltage source converter, thereby providing respective modified converter reference signals for the first voltage source converter and the second voltage source converter, for damping of oscillations generated between the converters.

9. The method for controlling a converter station according to claim 8, comprising determining DQ frame components of the phase currents, wherein determining the first current differences and the second current differences comprises determining the difference between D current components of the phase currents and determining the difference between Q current components of the phase currents; wherein the combining comprises combining the D and Q components of the first damping control signals with D and Q components of the converter reference voltage of the first voltage source converter (110), and combining the D and Q components of the second damping control signals with D and Q components of the converter reference voltage of the second voltage source converter (120).

10. The method for controlling a converter station according to claim 9, wherein combining the D and Q components of the first damping control signal with D and Q components of the converter reference voltage of the first voltage source converter (110) comprises adding the D and Q components of the first damping control signal to the D and Q components of the converter reference voltage, and wherein combining the D and Q components of the second damping control signal with D and Q components of the converter reference voltage of the second voltage source converter (120) comprises adding the D and Q components of the second damping control signal in the DQ frame to the D and Q components of the converter reference voltage.

11. The method for controlling a converter station according to 8, wherein determining the first current differences and the second current differences comprises determining the difference between A current components of the phase currents, determining the difference between B current components of the phase currents and determining the difference between C current components of the phase currents; wherein the combining comprises combining the respective A, B and C components of the damping control signals with corresponding A, B and C components of the respective converter reference voltage .

12. The method for controlling a converter station according to any one of claims 8 to 11, wherein the operation of multiplying each of the first current difference and the second current difference, respectively, with a respective gain further comprises applying an equal gain.

13. A computer program product comprising computer readable instructions which, when executed by a processing device, causes the converter station of any of claims 1-7 to carry out the method of any one of claims 8-12.

## Patentansprüche

1. Umrichterstation (100), die mindestens zwei Umrichter umfasst, die einen ersten Spannungsquellenumrichter (110) und einen zweiten Spannungsquellenumrichter (120) beinhalten, wobei
die Umrichterstation dazu ausgelegt ist, mit einem bipolaren Gleichstrom-System, DC-System, und mit einem Wechselstrom-System, AC-System, verbunden zu werden, wobei das DC-System zwei Pole aufweist und das AC-System mehrere Phasen aufweist, und wobei
der erste Spannungsquellenumrichter und der zweite Spannungsquellenumrichter mit jeweils einem der beiden Pole verbindbar und miteinander verbunden sind; wobei die Umrichterstation ferner Folgendes umfasst:
eine erste Umrichtersteuereinheit (112) und eine zweite Umrichtersteuereinheit (122), die mit dem ersten Spannungsquellenumrichter bzw. mit dem zweiten Spannungsquellenumrichter verbunden sind, wobei
die erste Umrichtersteuereinheit und die zweite Umrichtersteuereinheit dazu ausgelegt sind, Phasenströme des ersten Spannungsquellenumrichters und Phasenströme des zweiten Spannungsquellenumrichters zu erhalten, wobei
die erste Umrichtersteuereinheit und die zweite Umrichtersteuereinheit ferner eine erste Dämpfungssteuerung (114) bzw. eine zweite Dämpfungssteuerung (124) umfassen, wobei
sowohl die erste Dämpfungssteuerung als auch die zweite Dämpfungssteuerung einen Regler (116, 126) umfassen, wobei
die erste Dämpfungssteuerung dazu ausgelegt ist, erste Stromdifferenzen durch Subtrahieren der Phasenströme des zweiten Spannungsquellenumrichters von den Phasenströmen des ersten Spannungsquellenumrichters zu bestimmen, und die zweite Dämpfungssteuerung dazu ausgelegt ist, zweite Stromdifferenzen durch Subtrahieren der Phasenströme des ersten Spannungsquellenumrichters von den Phasenströmen des zweiten Spannungsquellenumrichters zu bestimmen,
wobei die erste und die zweite Dämpfungssteuerung dazu ausgelegt sind, die ersten Stromdifferenzen bzw. die zweiten Stromdifferenzen mit einer jeweiligen Verstärkung zum Erzeugen erster Dämpfungssteuersignale bzw. zweiter Dämpfungssteuersignale zu multiplizieren, wobei die Verstärkung mittels des Reglers eingeführt wird, und
wobei die erste Umrichtersteuereinheit ferner dazu ausgelegt ist, die ersten Dämpfungssteuersignale mit einer Umrichterreferenzspannung des ersten Spannungsquellenumrichters zu kombinieren, und die zweite Umrichtersteuereinheit ferner dazu ausgelegt ist, die zweiten Dämpfungssteuersignale mit einer Umrichterreferenzspannung des zweiten Spannungsquellenumrichters zu kombinieren, um jeweilige modifizierte Umrichterreferenzspannungen für den ersten Spannungsquellenumrichter und den zweiten Spannungsquellenumrichter zur Dämpfung von zwischen den Umrichtern erzeugten Schwingungen bereitzustellen.

2. Umrichterstation nach Anspruch 1, wobei die erste und die zweite Dämpfungssteuerung (114, 124) dazu ausgelegt sind, in einem DQ-Rahmen betrieben zu werden, wobei die erste Dämpfungssteuerung ferner dazu ausgelegt ist, die ersten Stromdifferenzen zu bestimmen, und die zweite Dämpfungssteuerung ferner dazu ausgelegt ist, die zweiten Stromdifferenzen zu bestimmen, indem sie jeweilige D-Stromkomponenten und Q-Stromkomponenten der Phasenströme des ersten und des zweiten Spannungsquellenumrichters (110, 120) verarbeiten, wobei die ersten und die zweiten Stromdifferenzen dadurch D-und Q-Differenzstromkomponenten umfassen.

3. Umrichterstation nach Anspruch 2, wobei die erste und die zweite Dämpfungssteuerung (114, 124) dazu ausgelegt sind, die D- und Q-Differenzstromkomponenten mit der jeweiligen durch die Regler (116, 126) bereitgestellten Verstärkung zu multiplizieren, um die jeweiligen ersten und zweiten Dämpfungssteuersignale in einem DQ-Rahmen zu erzeugen.

4. Umrichterstation nach Anspruch 3, wobei die erste Umrichtersteuereinheit (112) und die zweite Umrichtersteuereinheit (122) dazu ausgelegt sind, die jeweiligen ersten und zweiten Dämpfungssteuersignale in einem DQ-Rahmen mit den jeweiligen Umrichterreferenzspannungen in einem DQ-Rahmen für sowohl den ersten Spannungsquellenumrichter (110) als auch den zweiten Spannungsquellenumrichter (120) zu kombinieren, um die jeweiligen modifizierten Umrichterreferenzspannungen für den ersten Spannungsquellenumrichter und den zweiten Spannungsquellenumrichter bereitzustellen.

5. Umrichterstation nach Anspruch 1, wobei die erste und die zweite Dämpfungssteuerung dazu ausgelegt sind, in einem ABC-Rahmen betrieben zu werden, wobei die erste Dämpfungssteuerung (114) dazu ausgelegt ist, die ersten Stromdifferenzen zu bestimmen, und die zweite Dämpfungssteuerung ferner dazu ausgelegt ist, die zweiten Stromdifferenzen zu bestimmen, indem sie jeweilige A-Stromkomponenten, B-Stromkomponenten und C-Stromkomponenten der Phasenströme des ersten und des zweiten Spannungsquellenumrichters (110, 120) verarbeiten, wobei die ersten und die zweiten Stromdifferenzen dadurch A-, B- und C-Differenzstromkomponenten umfassen.

6. Umrichterstation nach Anspruch 5, wobei die erste und die zweite Dämpfungssteuerung dazu ausgelegt sind, die A-, B- und C-Differenzstromkomponenten mit der durch die Regler (116, 126) bereitgestellten Verstärkung zu multiplizieren, um die jeweiligen ersten und zweiten Dämpfungssteuersignale in einem ABC-Rahmen zu erzeugen.

7. Umrichterstation nach Anspruch 6, wobei die erste Umrichtersteuereinheit (112) und die zweite Umrichtersteuereinheit (122) dazu ausgelegt sind, A-, Bund C-Komponenten der jeweiligen ersten und zweiten Dämpfungssteuersignale mit den entsprechenden A-, B- und C-Komponenten der jeweiligen Umrichterreferenzspannungen für sowohl den ersten Spannungsquellenumrichter als auch den zweiten Spannungsquellenumrichter zu kombinieren, um die jeweiligen modifizierten Umrichterreferenzspannungen für den ersten Spannungsquellenumrichter (110) und den zweiten Spannungsquellenumrichter (120) bereitzustellen.

8. Verfahren zum Steuern einer Umrichterstation, die mindestens zwei Umrichter umfasst, die einen ersten Spannungsquellenumrichter (110) und einen zweiten Spannungsquellenumrichter (120) beinhalten, wobei
die Umrichterstation (100) dazu ausgelegt ist, mit einem bipolaren DC-System und mit einem AC-System verbunden zu werden, wobei das DC-System zwei Pole aufweist und das AC-System mehrere Phasen aufweist, und wobei
der erste Spannungsquellenumrichter und der zweite Spannungsquellenumrichter mit einem jeweiligen der beiden Pole verbindbar und miteinander verbunden sind, wobei das Verfahren Folgendes umfasst:
Erhalten von Phasenströmen des ersten Spannungsquellenumrichters und von Phasenströmen des zweiten Spannungsquellenumrichters,
Bestimmen erster Stromdifferenzen durch Subtrahieren der Phasenströme des zweiten Spannungsquellenumrichters von den Phasenströmen des ersten Spannungsquellenumrichters und zweiter Stromdifferenzen durch Subtrahieren der Phasenströme des ersten Spannungsquellenumrichters von den Phasenströmen des zweiten Spannungsquellenumrichters,
Multiplizieren jeder der ersten Stromdifferenzen bzw. der zweiten Stromdifferenzen mit einer jeweiligen Verstärkung zum Erzeugen erster Dämpfungssteuersignale bzw. zweiter Dämpfungssteuersignale und
Kombinieren der ersten Dämpfungssteuersignale mit einer Umrichterreferenzspannung des ersten Spannungsquellenumrichters und Kombinieren der zweiten Dämpfungssteuersignale mit einer Umrichterreferenzspannung des zweiten Spannungsquellenumrichters, wodurch jeweilige modifizierte Umrichterreferenzsignale für den ersten Spannungsquellenumrichter und den zweiten Spannungsquellenumrichter zur Dämpfung von zwischen den Umrichtern erzeugten Schwingungen bereitgestellt werden.

9. Verfahren zum Steuern einer Umrichterstation nach Anspruch 8, das das Bestimmen von DQ-Rahmenkomponenten der Phasenströme umfasst, wobei das Bestimmen der ersten Stromdifferenzen und der zweiten Stromdifferenzen das Bestimmen der Differenz zwischen D-Stromkomponenten der Phasenströme und das Bestimmen der Differenz zwischen Q-Stromkomponenten der Phasenströme umfasst; wobei das Kombinieren das Kombinieren der D- und Q-Komponenten der ersten Dämpfungssteuersignale mit D- und Q-Komponenten der Umrichterreferenzspannung des ersten Spannungsquellenumrichters (110) und das Kombinieren der D- und Q-Komponenten der zweiten Dämpfungssteuersignale mit D- und Q-Komponenten der Umrichterreferenzspannung des zweiten Spannungsquellenumrichters (120) umfasst.

10. Verfahren zum Steuern einer Umrichterstation nach Anspruch 9, wobei das Kombinieren der D- und Q-Komponenten des ersten Dämpfungssteuersignals mit D- und Q-Komponenten der Umrichterreferenzspannung des ersten Spannungsquellenumrichters (110) das Addieren der D- und Q-Komponenten des ersten Dämpfungssteuersignals zu den D- und Q-Komponenten der Umrichterreferenzspannung umfasst und wobei das Kombinieren der D- und Q-Komponenten des zweiten Dämpfungssteuersignals mit D- und Q-Komponenten der Umrichterreferenzspannung des zweiten Spannungsquellenumrichters (120) das Addieren der D- und Q-Komponenten des zweiten Dämpfungssteuersignals in dem DQ-Rahmen zu den D- und Q-Komponenten der Umrichterreferenzspannung umfasst.

11. Verfahren zum Steuern einer Umrichterstation nach Anspruch 8, wobei das Bestimmen der ersten Stromdifferenzen und der zweiten Stromdifferenzen das Bestimmen der Differenz zwischen A-Stromkomponenten der Phasenströme, das Bestimmen der Differenz zwischen B-Stromkomponenten der Phasenströme und das Bestimmen der Differenz zwischen C-Stromkomponenten der Phasenströme umfasst; wobei das Kombinieren das Kombinieren der jeweiligen A-, B- und C-Komponenten der Dämpfungssteuersignale mit entsprechenden A-, B- und C-Komponenten der jeweiligen Umrichterreferenzspannung umfasst.

12. Verfahren zum Steuern einer Umrichterstation nach einem der Ansprüche 8 bis 11, wobei der Vorgang des Multiplizierens jeder der ersten Stromdifferenz bzw. der zweiten Stromdifferenz mit einer jeweiligen Verstärkung ferner das Anwenden einer gleichen Verstärkung umfasst.

13. Computerprogrammprodukt, das computerlesbare Anweisungen umfasst, die, wenn sie durch eine Verarbeitungsvorrichtung ausgeführt werden, bewirken, dass die Umrichterstation nach einem der Ansprüche 1-7 das Verfahren nach einem der Ansprüche 8-12 vollzieht.

## Revendications

1. Station de conversion (100) comprenant au moins deux convertisseurs, dont un premier convertisseur de source de tension (110) et un deuxième convertisseur de source de tension (120),
la station de conversion étant configurée pour être connectée à un système à courant continu, CC, bipolaire et à un système à courant alternatif, CA, le système CC ayant deux pôles et le système CA ayant plusieurs phases, et
le premier convertisseur de source de tension et le deuxième convertisseur de source de tension pouvant être connectés à l'un des deux pôles respectifs et étant connectés l'un à l'autre ; la station de conversion comprenant en outre
une première unité de commande de convertisseur (112) et une deuxième unité de commande de convertisseur (122) connectées respectivement au premier convertisseur de source de tension et au deuxième convertisseur de source de tension,
la première unité de commande de convertisseur et la deuxième unité de commande de convertisseur étant configurées pour obtenir des courants de phase du premier convertisseur de source de tension et des courants de phase du deuxième convertisseur de source de tension,
la première unité de commande de convertisseur et la deuxième unité de commande de convertisseur comprenant en outre un premier contrôleur d'amortissement (114) et un deuxième contrôleur d'amortissement (124),
le premier contrôleur d'amortissement et le deuxième contrôleur d'amortissement comprenant chacun un régulateur (116, 126),
le premier contrôleur d'amortissement étant configuré pour déterminer des premières différences de courant en soustrayant aux courants de phase du premier convertisseur de source de tension les courants de phase du deuxième convertisseur de source de tension, et le deuxième contrôleur d'amortissement étant configuré pour déterminer des deuxièmes différences de courant en soustrayant aux courants de phase du deuxième convertisseur de source de tension les courants de phase du premier convertisseur de source de tension,
les premier et deuxième contrôleurs d'amortissement étant configurés pour multiplier les premières différences de courant et les deuxièmes différences de courant, respectivement, par un gain respectif pour générer des premiers signaux de commande d'amortissement et des deuxièmes signaux de commande d'amortissement, respectivement, le gain étant introduit au moyen du régulateur, et
la première unité de commande de convertisseur étant en outre configurée pour combiner les premiers signaux de commande d'amortissement à une tension de référence de convertisseur du premier convertisseur de source de tension et la deuxième unité de commande de convertisseur étant en outre configurée pour combiner les deuxièmes signaux de commande d'amortissement à une tension de référence de convertisseur du deuxième convertisseur de source de tension, afin de fournir des tensions de référence de convertisseur modifiées respectives au premier convertisseur de source de tension et au deuxième convertisseur de source de tension, pour amortir les oscillations générées entre les convertisseurs.

2. Station de conversion selon la revendication 1, dans laquelle les premier et deuxième contrôleurs d'amortissement (114, 124) sont configurés pour agir sur une trame DQ, le premier contrôleur d'amortissement étant en outre configuré pour déterminer les premières différences de courant et le deuxième contrôleur d'amortissement étant en outre configuré pour déterminer les deuxièmes différences de courant en agissant sur les composantes de courant D et les composantes de courant Q respectives des courants de phase des premier et deuxième convertisseurs de source de tension (110, 120), les première et deuxième différences de courant comprenant ainsi des composantes de courant de différence D et Q.

3. Station de conversion selon la revendication 2, dans laquelle les premier et deuxième contrôleurs d'amortissement (114, 124) sont configurés pour multiplier les composantes de courant de différence D et Q par le gain respectif fourni par les régulateurs (116, 126) pour générer les premier et deuxième signaux de commande d'amortissement respectifs dans une trame DQ.

4. Station de conversion selon la revendication 3, dans laquelle la première unité de commande de convertisseur (112) et la deuxième unité de commande de convertisseur (122) sont configurées pour combiner les premier et deuxième signaux de commande d'amortissement respectifs dans une trame DQ avec les tensions de référence de convertisseur respectives dans une trame DQ pour le premier convertisseur de source de tension (110) comme pour le deuxième convertisseur de source de tension (120) afin de fournir les tensions de référence de convertisseur modifiées respectives au premier convertisseur de source de tension et au deuxième convertisseur de source de tension.

5. Station de conversion selon la revendication 1, dans laquelle les premier et deuxième contrôleurs d'amortissement sont configurés pour agir sur une trame ABC, le premier contrôleur d'amortissement (114) étant configuré pour déterminer les premières différences de courant et le deuxième contrôleur d'amortissement étant en outre configuré pour déterminer les deuxièmes différences de courant en agissant sur les composantes de courant A, des composantes de courant B et des composantes de courant C respectives des courants de phase des premier et deuxième convertisseurs de source de tension (110, 120), les première et deuxième différences de courant comprenant ainsi des composantes de courant de différence A, B et C.

6. Station de conversion selon la revendication 5, dans laquelle les premier et deuxième contrôleurs d'amortissement sont configurés pour multiplier les composantes de courant de différence A, B et C par le gain fourni par les régulateurs (116, 126) pour générer les premier et deuxième signaux de commande d'amortissement respectifs dans une trame ABC.

7. Station de conversion selon la revendication 6, dans laquelle la première unité de commande de convertisseur (112) et la deuxième unité de commande de convertisseur (122) sont configurées pour combiner les composantes A, B et C des premier et deuxième signaux de commande d'amortissement respectifs avec les composantes A, B et C correspondantes des tensions de référence de convertisseur respectives pour le premier convertisseur de source de tension comme pour le deuxième convertisseur de source de tension afin de fournir les tensions de référence de convertisseur modifiées respectives au premier convertisseur de source de tension (110) et au deuxième convertisseur de source de tension (120).

8. Procédé de commande d'une station de conversion comprenant au moins deux convertisseurs, dont un premier convertisseur (110) de source de tension et un deuxième convertisseur (120) de source de tension,
la station de conversion (100) étant configurée pour être connectée à un système CC bipolaire et à un système CA, le système CC ayant deux pôles et le système CA ayant plusieurs phases, et
le premier convertisseur de source de tension et le deuxième convertisseur de source de tension pouvant être connectés à l'un, respectif, des deux pôles et étant connectés l'un à l'autre,
le procédé comprenant les étapes consistant à :
obtenir des courants de phase du premier convertisseur de source de tension et des courants de phase du deuxième convertisseur de source de tension,
déterminer des premières différences de courant en soustrayant aux courants de phase du premier convertisseur de source de tension les courants de phase du deuxième convertisseur de source de tension, et des deuxièmes différences de courant en soustrayant aux courants de phase du deuxième convertisseur de source de tension les courants de phase du premier convertisseur de source de tension,
multiplier chacune des premières différences de courant et des deuxièmes différences de courant, respectivement, par un gain respectif pour générer respectivement des premiers signaux de commande d'amortissement et des deuxièmes signaux de commande d'amortissement, et
combiner les premiers signaux de commande d'amortissement avec une tension de référence de convertisseur du premier convertisseur de source de tension et combiner les deuxièmes signaux de commande d'amortissement avec une tension de référence de convertisseur du deuxième convertisseur de source de tension, fournissant ainsi des signaux de référence de convertisseur modifiés respectifs au premier convertisseur de source de tension et au deuxième convertisseur de source de tension, pour amortir les oscillations générées entre les convertisseurs.

9. Procédé de commande d'une station de conversion selon la revendication 8, comprenant la détermination des composantes de trame DQ des courants de phase, dans lequel la détermination des premières différences de courant et des deuxièmes différences de courant comprend la détermination de la différence entre les composantes de courant D des courants de phase et la détermination de la différence entre les composantes de courant Q des courants de phase ; dans lequel la combinaison consiste à combiner les composantes D et Q des premiers signaux de commande d'amortissement avec des composantes D et Q de la tension de référence de convertisseur du premier convertisseur de source de tension (110), et à combiner les composantes D et Q des deuxièmes signaux de commande d'amortissement avec des composantes D et Q de la tension de référence de convertisseur du deuxième convertisseur de source de tension (120).

10. Procédé de commande d'une station de conversion selon la revendication 9, dans lequel la combinaison des composantes D et Q du premier signal de commande d'amortissement avec des composantes D et Q de la tension de référence de convertisseur du premier convertisseur de source de tension (110) consiste à additionner des composantes D et Q du premier signal de commande d'amortissement aux composantes D et Q de la tension de référence de convertisseur, et dans lequel la combinaison des composantes D et Q du deuxième signal de commande d'amortissement avec les composantes D et Q de la tension de référence de convertisseur du deuxième convertisseur de source de tension (120) consiste à additionner les composantes D et Q du deuxième signal de commande d'amortissement dans la trame DQ aux composantes D et Q de la tension de référence de convertisseur.

11. Procédé de commande d'une station de conversion selon la revendication 8, dans lequel la détermination des premières différences de courant et des deuxièmes différences de courant consiste à déterminer la différence entre des composantes de courant A des courants de phase, à déterminer la différence entre des composantes de courant B des courants de phase et à déterminer la différence entre des composantes de courant C des courants de phase ; dans lequel la combinaison consiste à combiner les composantes A, B et C respectives des signaux de commande d'amortissement avec les composantes A, B et C correspondantes de la tension de référence de convertisseur respective.

12. Procédé de commande d'une station de conversion selon l'une quelconque des revendications 8 à 11, dans lequel l'opération de multiplication de la première différence de courant et de la deuxième différence de courant, respectivement, par un gain respectif comprend en outre l'application d'un gain égal.

13. Produit-programme informatique comprenant des instructions lisibles par ordinateur qui, lorsqu'elles sont exécutées par un dispositif de traitement, amènent la station de conversion selon l'une quelconque des revendications 1à 7 à exécuter le procédé selon l'une quelconque des revendications 8 à 12.
